# EUROPÄISCHE PATENTSCHRIFT

(11) **EP 0 829 103 B1**
(45) Veröffentlichungstag und Bekanntmachung des Hinweises auf die Patenterteilung: **21.04.1999**
(21) Anmeldenummer: 96915951.6
(22) Anmeldetag: 28.05.1996
(51) Int. Cl.: H01M 8/06, H01M 8/12

(54) **ANODENSUBSTRAT FÜR EINE HOCHTEMPERATUR-BRENNSTOFFZELLE**
ANODE SUBSTRATE FOR A HIGH-TEMPERATURE FUEL CELL
SUBSTRAT D'ANODE POUR PILE A COMBUSTIBLE HAUTE TEMPERATURE

(30) Priorität: 31.05.1995 DE 19519847
(43) Veröffentlichungstag der Anmeldung: 18.03.1998
(73) Patentinhaber: FORSCHUNGSZENTRUM JÜLICH GMBH, 52425 Jülich (DE)
(72) Erfinder: DIVISEK, Jiri, D-52428 Jülich (DE); DE HAART, Lambertus, G., J., NL-6414 JE Heerlen (NL); RIENSCHE, Ernst, D-52428 Jülich (DE); STIMMING, Ulrich, D-80798 München (DE)
(86) Internationale Anmeldenummer: DE9600918
(87) Internationale Veröffentlichungsnummer: WO9638871

(56) Entgegenhaltungen:
- EP-A- 0 173 904
- US-A- 4 770 955
- PATENT ABSTRACTS OF JAPAN vol. 94, no. 012 & JP,A,06 342663 (NIPPON TELEGR & TELEPH CORP), 13.Dezember 1994,
- PATENT ABSTRACTS OF JAPAN vol. 016, no. 104 (E-1178), 13.März 1992 & JP,A,03 283266 (NKK CORP), 13.Dezember 1991,
- PATENT ABSTRACTS OF JAPAN vol. 017, no. 071 (E-1319), 12.Februar 1993 & JP,A,04 274168 (NIPPON TELEGR & TELEPH CORP), 30.September 1992,
- PATENT ABSTRACTS OF JAPAN vol. 017, no. 480 (E-1425), 31.August 1993 & JP,A,05 121084 (NIPPON TELEGR & TELEPH CORP), 18.Mai 1993,
- PATENT ABSTRACTS OF JAPAN vol. 96, no. 002 & JP,A,08 031423 (MITSUI ENG & SHIPBUILD CO LTD), 2.Februar 1996,
- PATENT ABSTRACTS OF JAPAN vol. 010, no. 104 (E-397), 19.April 1986 & JP,A,60 241674 (TOSHIBA KK), 30.November 1985,

## Beschreibung

Die Erfindung bezieht sich auf ein Anodensubstrat mit einer darauf aufgebrachten bipolaren Platte für eine Hochtemperatur-Brennstoffzelle, die bezüglich der Methan - Dampf - Reformierungsreaktion eine gering katalytisch wirkende sowie eine katalytisch wirkende Phase aufweist.

Eine Hochtemperatur-Brennstoffzelle (SOFC) besteht aus einem Brennstoffzellenstapel (Stack) und der zugehörigen Peripherie. Die Funktionsträger in der Brennstoffzelle sind: der Elektrolyt [Werkstoff z.B. Yttrium stabilisiertes Zirkondioxid (YSZ); ZrO₂ - 8 mol% Y₂O₃], die Kathode [Werkstoff z.B. Strontium dotiertes Lanthanmanganoxid (LSM); La_{1-x-y}SrₓMnO_{3-z}] und die Anode, bestehend aus einer keramischen (= nicht katalytisch wirkenden) sowie einer metallischen (= katalytisch wirkenden) Phase [z.B. Nickel-YSZ Cermet; 40 vol% Ni / ZrO₂ - 8 mol% Y₂O₃]. Zur Serien- und/oder Parallelschaltung mehrerer Zellen in einem Stack wird ein vierter Funktionsträger benötigt: die bipolare Platte [Werkstoff z.B. Erdalkalimetall dotiertes Lanthanchromat; La₁₋ₓMeₓCrO₃ (Me = Sr, Ca) oder eine Hochtemperatur-Cr-Legierung; Cr5Fe1(Y₂O₃) ]. [A. Hammou, Adv. Electrochem. Sci. and Engin. **2** (1992) 87-139; N.Q. Minh, J. Am. Ceram. Soc. **76** (1993) 563-88; D. Stolten and W. Schäfer, in: Technische Keramische Werkstoffe, J. Kriegsmann (Hrsg.), Deutscher Wirtschaftsdienst, John von Freyland GmbH, Köln, 1994, Kap. 8.5.2.0].

Zur Anfertigung eines Stacks werden zwei Konzepte verfolgt. Das erste Konzept basiert auf Rohren, die eine tragende Funktion haben und die mechanische Stabilität der Zelle gewährleisten müssen. Die Rohre sind entweder aus einem inerten Material oder einem der beiden Elektrodenmaterialien angefertigt. Auf dieses Rohr werden die Funktionskomponenten in spezifischer Geometrie und Reihenfolge als Schichten aufgebracht. Das zweite Konzept basiert auf selbsttragenden Elektrolytfolien und bipolaren Platten mit flacher Geometrie. Die beiden Elektroden werden auf der Elektrolytfolie als Schichten aufgetragen. Sowohl die Elektrolytfolie, als auch die bipolare Platte müssen die mechanische Stabilität gewährleisten. [A. Hammou, Adv. Electrochem. Sci. and Engin. **2** (1992) 87-139; N.Q. Minh, J. Am. Ceram. Soc. **76** (1993) 563-88; D. Stolten and W. Schäfer, in: Technische Keramische Werkstoffe, J. Kriegsmann (Hrsg.), Deutscher Wirtschaftsdienst, John von Freyland GmbH, Köln, 1994, Kap. 8.5.2.0] Beide oben erwähnten Stack-Konzepte haben ihre spezifischen Nachteile. Das Rohrenkonzept führt wegen der Geometrie zu langen Ladungstransportwegen, was hohe ohmsche Verluste ergibt. Wegen der groben Porosität des porösen Trägerrohrs ist eine beträchtliche Mindestdicke der Elektrolytschicht notwendig, um Gasdichtigkeit zu gewährleisten. Das Flachzellen-Konzept hat den Nachteil, daß eine Mindestdicke der selbsttragenden Elektrolytfolie notwendig ist, um die mechanische Stabilität zu gewährleisten. Dies beschränkt die selbsttragende Elektrolytfolie ebenfalls in der Größe (effektive Fläche). Dies bedeutet für beide Konzepte, daß die Stacks wegen der relativ dicken Elektrolytschicht (oder -folie) nur bei Temperaturen oberhalb von 900 °C ohne beträchtliche Ohmsche Verluste betrieben werden können. Um diesen Mangel zu beheben, ist das Substratkonzept in flacher Geometrie entwickelt worden. Dies beinhaltet ein poröses Substrat, hergestellt aus einem der beiden Elektrodenmaterialien, das eine tragende Funktion erfüllt und dementsprechend dick angefertigt werden muß, so daß die Zelle auch in technisch relevanten Größen angefertigt werden kann. Auf dieses Substrat wird nach einem Dünnfilmherstellungsverfahren eine sehr dünne Elektrolytschicht aufgebracht und im nächsten Schritt wird auf dieser Elektrolytschicht mit einem üblichen Herstellungsverfahren die zweite Elektrodenschicht aufgebracht. Diese Dreischicht-Zelleinheiten werden zusammen mit den üblichen bipolare Platten in Serie zu einem Stack geschaltet [T. lwata and H. Shundo, 2nd Symp. SOFC Japan, Tokyo, Dec 15-16, 1993, Extended Abstract No. 101, p. 1-4].

Der Stand der Technik weist folgenden Nachteil auf. Bei Einspeisung von Erdgas im Anodenraum läuft direkt am Metall/YSZ-Cermet die Methan-Dampf Reformierungsreaktion ab, da die metallische Phase (z. B. Ni) gemäß dem Stand der Technik bezüglich der Methan-Dampf Reformierungsreaktion katalytisch wirkt. Diese Reaktion ist stark endotherm (ΔH = 227.5 kJ/mol bei 1000 °C) und entzieht deshalb Wärme aus ihrer Umgebung. Außerdem ist die Reaktionsrate dieser Reaktion sehr groß im Vergleich zu der nachfolgenden elektrochemischen Reaktionen (bei 900 °C Faktor 40). Dies hat zur Folge, daß bereits innerhalb einer Strecke von 10 mm nach Gaseintritt im Anodenraum, die Reformierungsreaktion komplett abgelaufen ist. Die innerhalb dieser kurzen Strecke benötigte Wärme kann durch die viel langsamere elektrochemische Reaktionen nicht ausreichend nachgeliefert werden, so daß ein Temperatureinbruch entsteht. Aus diesem Grund benötigen die obigen Stackvarianten einen Vorreformer in der Peripherie, wo die Methan - Dampf -Reformierungsreaktion teilweise ablaufen kann, um große Temperaturgradienten im Stack zu vermeiden bzw. um eine gleichmäßigere Temperaturverteilung zu erzielen.

JP-A-06 342 663 schlägt vor, die Katalytisch aktive Anodenmasse in variierender Dicke einzusetzen, EP-A-0 173 904 beschreibt die Auftragung des Katalysators in variierender Konzentration und JP-A-04 274 168 diejenige auf Teile der Brenngas Kanale.

Aufgabe der Erfindung ist die Bereitstellung eines Anodensubstrats mit aufgebrachter bipolarer Platte für eine Hochtemperatur-Brennstoffzelle, mit der auf einfache Weise eine gleichmäßigere Temperaturverteilung erzielt werden kann.

Die Aufgabe wird mittels eines Anodensubstrats für eine Hochtemperatur-Brennstoffzelle gelöst, welches eine keramische, eine bezüglich der Methan - Dampf - Reformierungsreaktion katalytisch wirkende metallische Phase sowie Bereiche reduzierter Katalysatorkonzentration zur Verzögerung der Methan - Dampf - Reformierungsreaktion aufweist.

Reduzierte Katalysatorkonzentration bedeutet, daß die Konzentration der katalytisch wirkenden metallischen Phase im Substrat gegenüber der üblichen Konzentration (vorzugsweise um ca. 30 - 40 % des Metalls) reduziert ist, wobei die katalytisch wirkende metallische Phase durch eine gering katalytisch wirkende metallische Phase ersetzt worden ist. Als Metalle kommen dann insbesondere Übergangsmetalle der 1. oder 2. Reihe wie Fe oder Co in Betracht, da diese (z. B. im Vergleich zu Ni) eine deutlich herabgesetzte Aktivität für die Methan-Dampf Reformierungsreaktion aufweisen. Das Ersetzen der katalytisch wirkenden metallischen Phase durch eine gering katalytisch wirkende metallische Phase bezweckt die Aufrechterhaltung der elektrischen Leitfähigkeit des Substrats. Folglich ist dann die Konzentration der gering katalytisch wirkenden metallischen Phase vorteilhaft zweckentsprechend zu wählen.

Bereiche reduzierter Katalysatorkonzentration zur Verzögerung der Methan - Dampf - Reformierungsreaktion liegen insbesondere dann vor, wenn sie innerhalb der Brennstoffzelle unmittelbar benachbart zu den Gaskanälen angeordnet sind. Der Kontakt des durch die Gaskanäle geleiteten Gases mit dem Katalysator und somit der Reaktionsablauf wird infolge dieser Anordnung verzögert. Vorteilhaft wird die Reduktion der vorhandenen Konzentration des Reformierungskatalysators im kritischen Eintrittsbereich des Anodenraums vorgenommen. Die Reduzierung ist vorzugsweise so zu wählen, daß die relativen Geschwindigkeiten der elektrochemischen und Reformierungsreaktionen weitgehend gleich sind.

Bei einem optimalen Aufbau sind die Prozesse elektrischer Ladungstransport durch die metallische Phase, Gastransport durch die Poren, Methan-Dampf Reformierung an der Reformierungskatalysatoroberfläche und elektrochemische Oxidation des Brenngases an der Grenzfläche Elektrolyt/Anode durch Graduierung der Zusammensetzung, der Porosität und der Porengrößenverteilung des Anodensubstrats räumlich und zeitlich zur Überwindung des nachteilhaften Temperaturgradienten aufeinander abgestimmt.

Die Realisierung der Erfindung ist mit einer genügend dicken Anodenschicht möglich. Vorteilhaft beträgt die Dicke des Substrats 0,5 mm bis 5 mm.

Vorteilhafte Wirkungen der Erfindung dieser Substratzelle in flacher Geometrie mit graduierter Katalysatorkonzentration und Mikrostruktur sind:
- gezielte Abstufung der Metall-Konzentration ermöglicht eine komplette interne Reformierung mit einer gleichmäßigen Temperaturverteilung
- Verwirklichung der internen Reformierung macht den Vorreformer in der Peripherie unnötig
- Verwirklichung der internen Reformierung und Verzicht auf den Vorreformer in der Peripherie erlaubt Brenngasrückführung über einen Anodenkreislauf und Betrieb des Stacks mit erniedrigtem Brenngasnutzungsgrad
- Verwirklichung der internen Reformierung bedeutet starke Herabsetzung der benötigte Kühlluftmenge
- starke Herabsetzung der benötigte Kühlluftmenge erlaubt Rückführung der Luft über einen Kathodenkreislauf

Es zeigen
- Fig.1:: Substrat mit schichtförmigem Bereich reduzierter Katalysatorkonzentration
- Fig. 2: Substrat mit Bereichen reduzierter Katalysatorkonzentration spezieller Geometrie

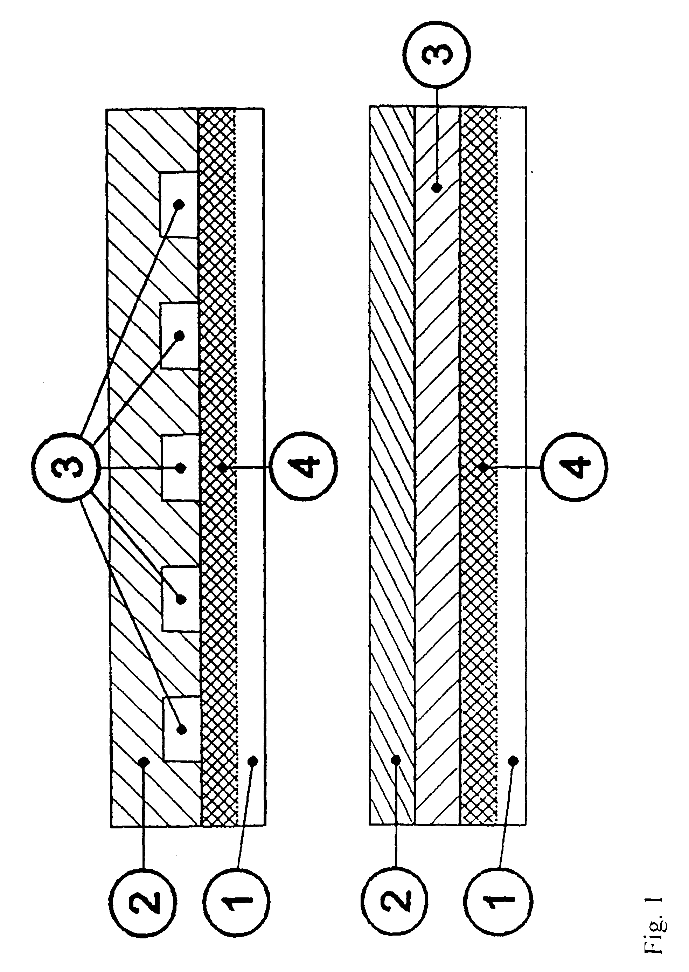

Fig. 1 zeigt einen Querschnitt durch eine Substratzelle im Bereich Anodensubstrat / bipolare Platte 2. . Die obere Abbildung in Fig. 1 verdeutlicht den Eintritt des Brenngases (Methan) in den Anodenraum, d.h. in die Gaskanäle 3, die in der bipolaren Platte 2 angebracht sind. Die untere Abbildung zeigt eine (gegenüber der oberen Abbildung) um 90° verdrehte Seitenansicht.

Das Anodensubstrat besteht aus zwei unterschiedlichen Schichten 1 und 4. Die untere Schicht mit einer Dicke von 1 mm, die sich im Kontakt mit dem Elektrolyten befindet, weist die Zusammensetzung des üblichen Ni/YSZ-Cermets auf. Bei der oberen Schicht 4 mit einer Dicke von 2 mm handelt es sich ebenfalls um ein Metall / YSZ-Cermet. Allerdings sind als Metalle sowohl Fe als auch Co eingesetzt worden. Diese weisen eine deutlich niedrigere Aktivität für die Methan-Dampf Reformierung auf. Die Konzentration des Fe bzw. Co ist so gewählt worden, daß die erforderliche elektrische Leitfähigkeit der Schicht 4 gewährleistet ist.

Aufgrund der niedrigeren Aktivität der oberen Substratschicht verzögert sich die Methan-Dampf-Reformierungsreaktion derart, daß sie erst beim Austritt des Gases aus dem Anodenraum vollständig abgelaufen ist.

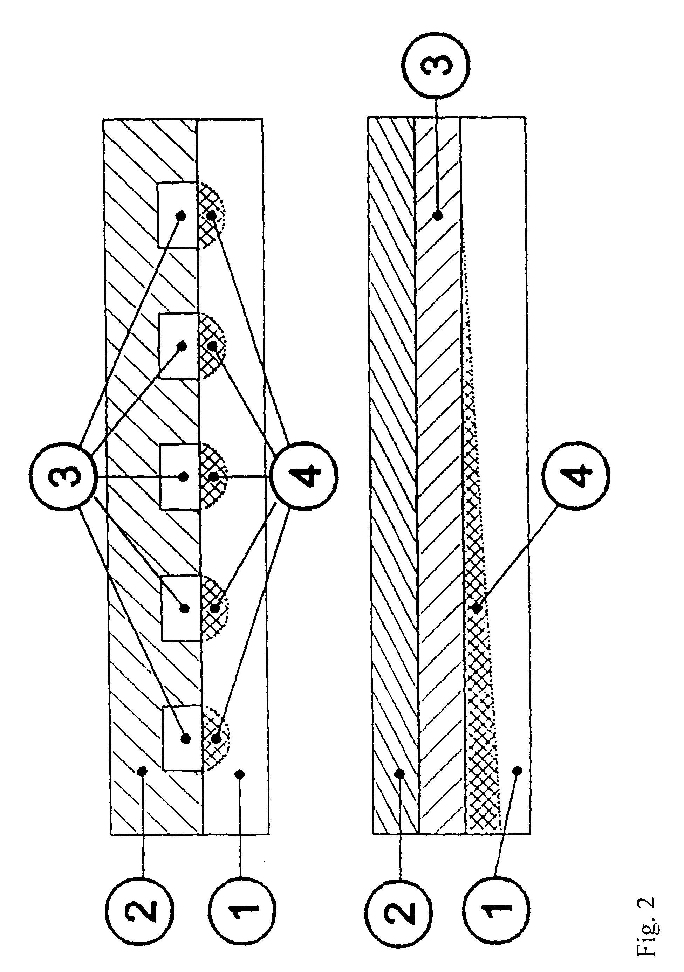

Fig. 2 zeigt ebenfalls die zwei Seitenansichten von Querschnitten durch eine Substrat zelle im Bereich Anodensubstrat / bipolare Platte 2. Die obere Abbildung in Fig. 2 verdeutlicht, den Eintritt des Brenngases (Methan) in den Anodenraum, d.h. in die Gaskanäle 3, die in der bipolaren Platte 2 angebracht sind. Die untere Abbildung zeigt eine (gegenüber der oberen Abbildung) um 90° verdrehte Seitenansicht, also den Querschnitt entlang des Gaskanals 3.

Das Anodensubstrat ist bis auf die Bereiche 4 wie üblich zusammengesetzt. Die Bereiche 4 stehen im direkten Kontakt mit den Gaskanälen (3) und sind horizontal auf diese beschränkt (siehe obere Abbildung). In diesen Bereichen 4 ist die Katalysatorkonzentration (z.B. Ni-Anteil) auf 0 bis 30 vol% herabgesetzt. Sie sind zwischen 0.001 und 1 mm gemäß unterer Abbildung in Fig. 2 tief: Die Tiefe des Bereichs reduzierter Katalysatorkonzentration 4 nimmt dabei vom Eintritt des Gaskanals über seine Länge kontinuierlich oder diskontinuierlich ab.

Die elektrische Leitfähigkeit in den Bereichen 4 braucht im Unterschied zur Ausführung nach Fig. 1 nicht kompensiert zu werden, da der Stromfluß zur bipolare Platte 2 aufgrund der ausgesparten Bereiche bezüglich reduzierter Katalysatorkonzentration (siehe obere Abbildung) gewährleistet ist. Allerdings ist die Herstellung eines Substrates gemäß Fig. 1 einfacher als die des Substrates gemäß Fig. 2.

## Patentansprüche

1. Anodensubstrat (3, 4) mit einer darauf aufgebrachten bipolaren Platte für eine Hochtemperatur-Brennstoffzelle, das eine katalytisch wirkende metallische Phase mit Bereichen reduzierter Katalysatorkonzentration (4) zur Verzögerung der Methan - Dampf - Reformierungsreaktion aufweist, in denen die katalytisch wirkende metallische Phase durch eine gering katalytisch wirkende metallische Phase ersetzt ist.

## Claims

1. Anode substrate (3, 4) with a thereto applied bipolar plate for a high-temperature fuel cell, comprising a catalytically operative metallic phase with areas of reduced catalyst concentration (4) for delaying the methane-vapour reformation reaction, in which the catalytically operative metallic phase is replaced by a low catalytically operative metallic phase.

## Revendications

1. Substrat (3,4) d'anode ayant une plaque bipolaire qui y est déposée, pour une pile à combustible à haute température, le substrat ayant une phase métallique à action catalytique, ayant des régions de concentration (4) de catalyseur réduite pour ralentir la réaction de reformage méthane-vapeur, dans lesquelles la phase métallique à action catalytique est remplacée par une phase métallique à faible action catalytique.
